# EUROPEAN PATENT SPECIFICATION

(11) **EP 4 233 488 B1**
(45) Date of publication and mention of the grant of the patent: **06.08.2025**
(21) Application number: 20800040.6
(22) Date of filing: 23.10.2020
(51) Int. Cl.: H04W 88/06, H04W 24/02, H04W 48/18

(54) **DATA COLLECTION ON "OUT OF CONNECTIVITY" DETECTION FROM TERMINAL ACCESSING VARIOUS INTERFACES**
DATENSAMMLUNG ÜBER KONNEKTIVITÄTSAUSGANGSERKENNUNG VON EINEM ENDGERÄT, DAS AUF VERSCHIEDENE SCHNITTSTELLEN ZUGREIFEN KANN
COLLECTE DE DONNÉES LORS DE LA DÉTECTION DE "HORS DE TOUTE CONNECTIVITÉ" À PARTIR D'UN TERMINAL ACCÉDANT À DIVERSES INTERFACES

(43) Date of publication of application: 30.08.2023
(73) Proprietor: Nokia Technologies Oy, 02610 Espoo (FI)
(72) Inventor: TOMALA, Malgorzata, 54-513 Wroclaw (PL); PANTELIDOU, Anna, 91300 Massy (FR)
(74) Representative: Script Intellectual Property LLP
(86) International application number: PCT/EP2020/079935
(87) International publication number: WO 2022/083878

(56) References cited:
- US-A1- 2015 223 094
- US-A1- 2016 301 486
- US-A1- 2017 111 830
- US-A1- 2019 306 740

## Description

### TECHNICAL FIELD

This disclosure relates to 5G New Radio and, in particular, to a new state, identified as "Out of Any Connectivity", in which a user equipment (UE) will perform data logging when no connection to a network is available.

### BACKGROUND

US2017/111830 discloses a network coverage hole detection mechanism for detecting a hole in LTE cell coverage, that uses a UE to perform MDT Minimisation of Drive Test data collection. The data may be collected and stored when the UE is in idle mode and it may be reported when the UE reconnects to the network, in some cases in response to a request for the data. In other embodiments, the data may be collected in a connected state and reported immediately. The UE may be triggered to record MDT data in response to a cell re-selection event, that is moving between cells or detecting a cell coverage hole.

5G targets a variety of use cases and industries. A more distributed core with a combination of a variety of RAN deployments is generally viewed as the framework for more flexibility, customization, and service-driven management in a viable 5G system. From a network traffic management perspective, 5G also allows coordination and arrangements to different services to enhance mobile network performance.

A primary 5G data-driven use case, Enhanced Mobile Broadband (eMBB), requires high data rates across a wide radio coverage area when a user communicates over the air with a base station in regular radio operation in good radio coverage. However, the radio coverage can coexist with supportive deployments.

For example, an eMBB user, capable of cellular and Wi-Fi or Bluetooth communication, moving inside a WLAN network, upon detecting the presence of the WLAN, may switch to IP mode in order to access the WLAN and may automatically connect to it. This allows the eMBB user to get seamless voice and data session continuity, for example, by switching a call to a VoIP (Voice over IP) call.

Another example is Vehicle-to-Everything (V2X) Communications, which are based on D2D communications, defined as part of ProSe (Proximity Services). As part of ProSe services, a new D2D interface, designated as PC5, also known as sidelink at the physical layer, was introduced and, as part of V2V (vehicle-to-vehicle), it has been enhanced for vehicular use cases, specifically addressing high speed and high density of the network nodes. Vehicle-to-everything communications technology allows vehicles to directly communicate with each other, with roadside infrastructure, and with other road users to deliver traffic efficiency and road safety, even in environments where radio coverage is not available.

In yet another example, non-terrestrial networks (NTN) refers to networks, or segments of networks, using an airborne or spaceborne vehicle for transmission. These non-terrestrial networks will provide satellite infrastructure support for 5G, and will be used to foster the 5G service roll-out in unserved or underserved areas to upgrade the performance of terrestrial networks.

Self-Organising Networks (SON), which encompass solutions for network self-configuration and self-optimisation, were introduced in LTE to support deployment of system and performance optimization. SON became a baseline for the 5G standardized method for data collection. MDT has been used as a parallel and complementary feature to enable UE feedback which will further allow network optimization based on end-user reports. The key objective of SON- and MDT-oriented solutions was to introduce automated data collection in 5G by gathering feedback from the field from regular end-users. Two types of MDT, Immediate and Logged MDT, provide methods to deliver real-time measurements, that is, results of measurements performed for typical RRM operations, and non-real time measurement results taken during a time when the UE was out of network reach, such as by being in RRC IDLE or RRC INACTIVE states, respectively. While the data contents are expected to be differentiated to provide reliable feedback on different services and a better reflection of diverse 5G requirements, the MDT reports are also used to record UE feedback when having a 3GPP/RRC connection released does not cover the possibility of investigating user behavior and experience in networks coexisting as supportive deployments for regular radio.

However, different types of UEs may have different connectivity to different networks and for different services. As MDT data collection focuses on radio measurements, users, providing logged data collection from the same network area, will not reflect their real network perception. A regular eMBB user may lose network coverage and experience an actual "out of radio coverage" state, and will record the state as "out of service" detection, while an underlying network, deployed at the coverage hole or at the edge of eMBB network, may provide a service, and the user may be able to establish direct communication through a supportive interface. For instance, if the underlying network is a WLAN, the user can establish a Wi-Fi connection through a supportive interface while, if the underlying network is a V2X, the user may be able to establish direct communication through a PC5 link. Thus, even if a user may be in "out of radio coverage", in these cases it can still enjoy a service. In future deployments, such as cell-less, there will be no means to know real coverage/service holes, that is, where there is really a connectivity interruption. For network providers, who can jointly serve the different infrastructures, the problem lies in the interpretation of whether radio/cell loss is equivalent to absolute dis-connectivity.

The present disclosure introduces a new "Out of Any Connectivity" state to allow the UE to monitor the state and to enter it once there is a loss of any alternate (network) connection.

### SUMMARY

In a first aspect of the present disclosure, a method according to claim 7 is provided.

The method may further comprise: monitoring 5G-network coverage; detecting a loss of 5G-network coverage; and beginning to store "Out of 5G Radio Coverage" information.

The logged measurement configuration may include a job type. The job type may be logged minimization of drive test (MDT) measurements. The logged measurement configuration may include an event trigger. The event trigger may be "Out of Any Connectivity". The logged measurement configuration may specify a network type. The network type may be the at least one non-5G-network service.

Determining connectivity may include, in the case of V2X, checking whether a PC5 interface is detectable. Determining connectivity may include, in the case of WLAN, checking whether a Wi-Fi beacons are detectable. Determining connectivity may include, in the case of NTN, checking whether a satellite signal is detectable.

The at least one non-5G-network service includes all available non-5G-network services. The at least one non-5G-network service may include one or more non-3gpp networks. The one or more non-3gpp networks may include Bluetooth (BT).

In a second aspect of the present disclosure, an apparatus according to claim 1 is provided.

The logged measurement configuration may include a job type. The job type may be logged minimization of drive test (MDT) measurements. The logged measurement configuration may include an event trigger. The event trigger may be "Out of Any Connectivity". The logged measurement configuration may specify a network type. The network type may be the at least one non-5G-network service.

Determine connectivity may include, in the case of V2X, checking whether a PC5 interface is detectable. Determine connectivity may include, in the case of WLAN, checking whether a Wi-Fi beacons are detectable. Determine connectivity may include, in the case of NTN, checking whether a satellite signal is detectable.

The at least one non-5G-network service includes all available non-5G-network services. The at least one non-5G-network service may include one or more non-3gpp networks. The one or more non-3gpp networks may include Bluetooth (BT).

In a further aspect of the present disclosure, a computer program product comprises a non-transitory computer-readable storage medium bearing computer program code embodied therein for use with a computer, the computer program code comprising code for performing: a method according to claim 7.

In a sixth aspect of the present disclosure, a network comprises at least one apparatus as described above.

In some embodiments, the method further comprises: when connectivity over the at least one non-5G-network service is not detected, entering an "Out of Any Connectivity" state; logging "Out of Any Connectivity" data; storing the "Out of Any Connectivity" data; when 5G-network coverage is detected, exiting from the "Out of Any Connectivity" state; reporting availability of logged "Out of Any Connectivity" data to the network node; and forwarding the logged "Out of Any Connectivity" data to the network node.

The at least one non-5G-network service may include all available non-5G-network services. The at least one non-5G-network service may include one or more non-3gpp networks. The one or more non-3gpp networks may include Bluetooth (BT).

### BRIEF DESCRIPTION OF THE DRAWINGS

The foregoing and other aspects of these teachings are made more evident in the following detailed description, when read in conjunction with the attached drawing figures.
Figure 1 shows a simplified block diagram of certain apparatus in which the subject matter of the present disclosure may be practiced.
Figures 2 and 3 show an example of New Radio (NR) architecture having the 5G core (5GC) and the NG-RAN.
Figure 4 shows user equipments out of NR signal coverage and in supportive network coverage, such as WLAN.
Figure 5 shows user equipments out of NR signal coverage and disconnected from supportive network coverage.
Figure 6 illustrates configuration and unsuccessful detection of the "Out of Any Connectivity" state for eMBB traffic.
Figure 7 illustrates configuration and unsuccessful detection of the "Out of Any Connectivity" state for V2X traffic.
Figure 8 illustrates configuration and successful detection of the "Out of Any Connectivity" state for V2X traffic.
Figure 9 illustrates configuration and successful detection of the "Out of Any connectivity" state for V2X traffic with selective configuration of the underlying network to monitor.
Figure 10 is a flow chart illustrating a method performed by a user equipment in one embodiment of the present disclosure.
Figure 11 is a flow chart illustrating a method performed by a user equipment in another embodiment of the present disclosure.

### DETAILED DESCRIPTION

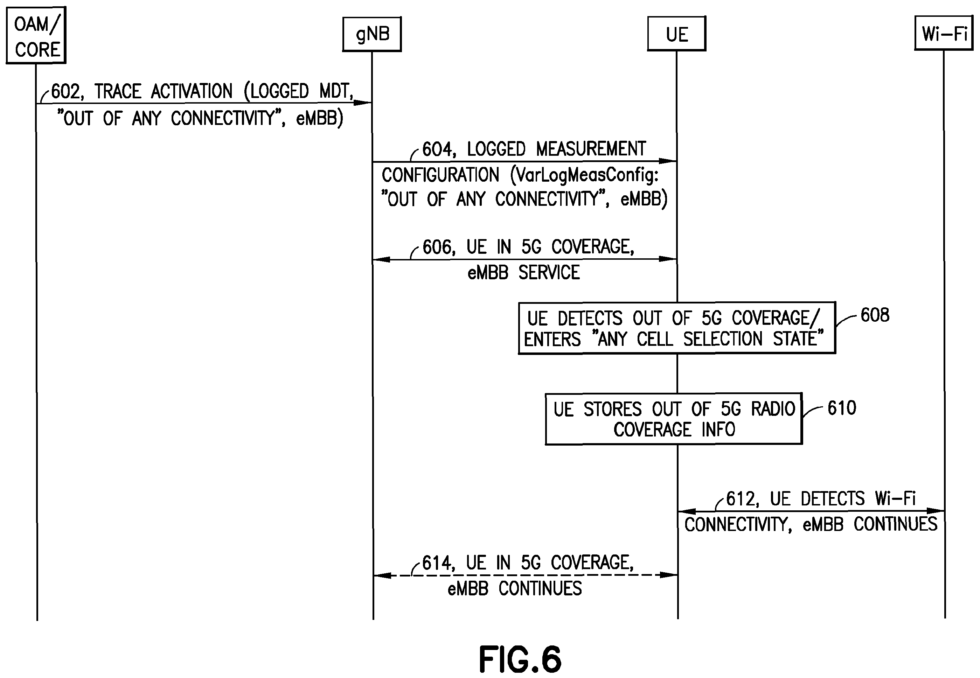

The invention is best understood with reference to Figures 6 to 11.

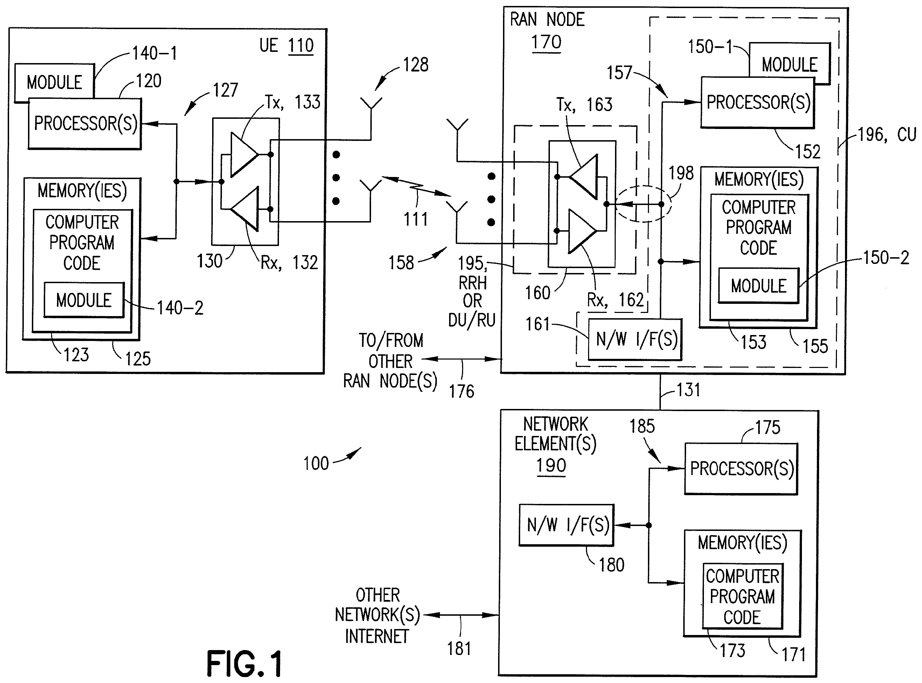

Figure 1 is a block diagram of one possible and non-limiting example in which the subject matter of the present disclosure may be practiced. A user equipment (UE) 110, radio access network (RAN) node 170, and network element(s) 190 are illustrated. In the example of Figure 1, the user equipment (UE) 110 is in wireless communication with a wireless network 100. A UE is a wireless device, such as a mobile device, that can access the wireless network. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured, with the one or more processors 120, to cause the user equipment 110 to perform one or more of the operations as described herein. The UE 110 communicates with RAN node 170 via a wireless link 111.

The RAN node 170 in this example is a base station that provides access to wireless devices, such as the UE 110. The RAN node 170 may be, for example, a base station for 5G, also called New Radio (NR). In 5G, the RAN node 170 may be an NG-RAN node, which is defined as either a gNB or an ng-eNB. A gNB is a node providing NR user plane and control-plane protocol terminations towards the UE, and connected via the NG interface to a 5GC, such as, for example, the network element(s) 190. The ng-eNB is a node providing E-UTRA user plane and control plane protocol terminations towards the UE, and connected via the NG interface to the 5GC. In one of several approaches, the NG-RAN node may include multiple network elements, which may also include a centralized unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or ng-eNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, for example, as part of a RU, but some examples of this may have the transceiver 160 as part of a separate RU, for example, under control of and connected to the DU 195. The RAN node 170 may also be an eNB (evolved NodeB) base station, for LTE (long term evolution), or any other suitable base station or node.

The preceding paragraph describes one way of splitting the gNB functions: other splits are possible as well with different distributions of [LOW-PHY/HIGH-PHY/PHY]MAC/RLC/PDCP[/SDAP]/RRC functions across the various network nodes and different interfaces for connecting the network nodes.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, module 150 may be implemented as module 150-2, which is implemented as computer program code 153 executed by the one or more processors 152. For instance, the one or more memories 155 and the computer program code 153 are configured, with the one or more processors 152, to cause the RAN node 170 to perform one or more of the operations as described herein. Note that the functionality of the module 150 may be distributed, such as being distributed between the DU 195 and the CU 196, or be implemented solely in the CU 196.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a centralized unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360° area so that the single base station's coverage area covers an approximate oval or circle. Furthermore, each cell can correspond to a single carrier and a base station may use multiple carriers. So, if there are three 120° cells per carrier and two carriers, then the base station has a total of six cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, for example, an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured, with the one or more processors 175, to cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer-readable memories 125, 155, and 171 may be of any type suitable to the local technical environment and may be implemented using any suitable data storage technology, such as semiconductor-based memory devices, flash memory, magnetic memory devices and systems, optical memory devices and systems, fixed memory and removable memory. The computer-readable memories 125, 155, and 171 may be means for performing storage functions. The processors 120, 152, and 175 may be of any type suitable to the local technical environment, and may include one or more of general-purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

The user equipment 110 may also refer to Internet of Things (IoT) devices, massive industrial networks, smart city infrastructure, wearable devices, networked medical devices, autonomous devices, etc. These types of UE devices may operate for extended periods of time without human intervention (e.g., perform maintenance, replace or recharge an on-device battery, etc.), may have reduced processing power and/or memory storage, may have reduced battery storage capability due to having small form factors, may be integrated into machinery (e.g., heavy machinery, factory machinery, sealed devices, etc.), may be installed/located in hazardous environment or difficult to access environments, etc.

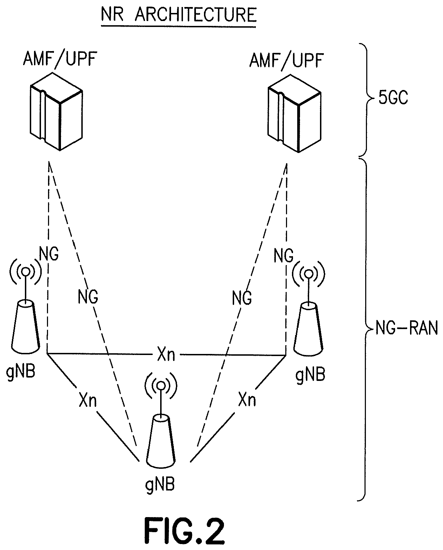

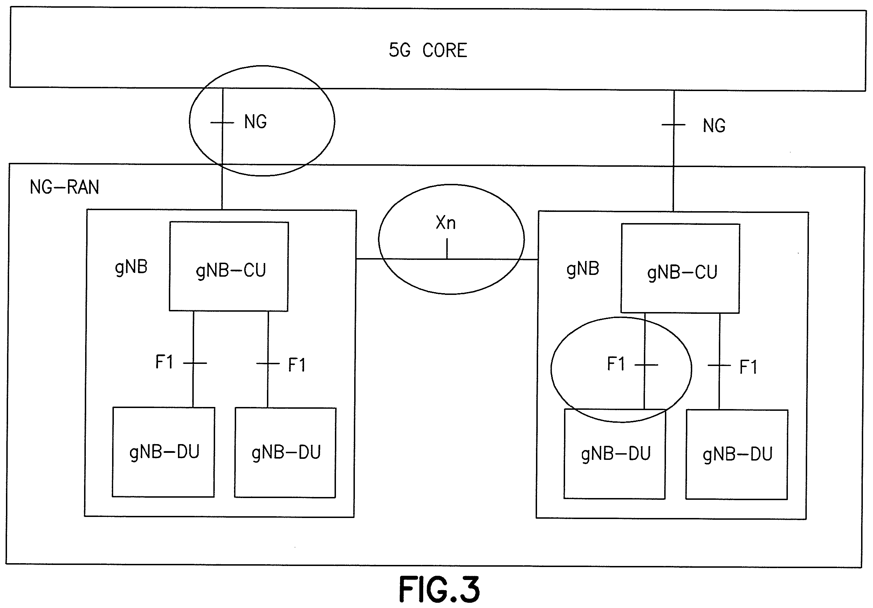

Figures 2 and 3 show an example of New Radio (NR) architecture having the 5G core (5GC) and the NG-RAN. The base stations gNB are coupled to the 5GC by the interface to core NGs, and the gNBs are coupled to each other by the inter-base station interface Xn.

As noted above, different types of UEs may have different connectivity to different networks and for different services. For example, an eMBB user may use an eMBB network, but also a Wi-Fi network or BT (Bluetooth). On the other hand, a V2X user may have two connections, such as eMBB and PC5.

At the present time, when a UE is in an RRC IDLE state and experiences a coverage hole in a radio network, the UE indicates this to the network in its MDT reports, by recording an "out of coverage" based on a radio signal loss, even though there might be coverage through another network type allowing the UE to "enjoy" the service. The indications on "out of coverage" state are limited to cell-based networks and 5G radio signal detection. They imply the user had no 5G radio coverage.

MDT reporting for "out of coverage" does not reflect any further infrastructure continuity on WLAN or through a PC5 interface, and thus does not bring any value to automated data collection for WLAN or V2X infrastuctures. It tends to underestimate communication capabilities of the WLAN or V2X traffic and does not provide insight on the service perception of an actual user. In the future, when NTN networks will provide satellite infrastructure support for 5G, the underestimation will also apply for this type of traffic.

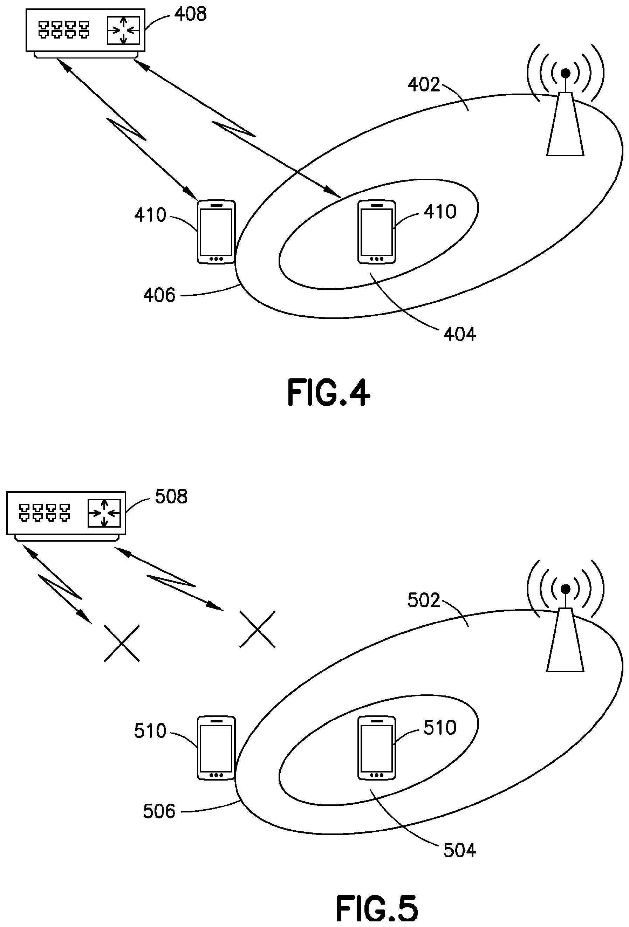

Users, providing logged data collection from the same network area, will not reflect their real network perception in terms of whether they received service or not. Specifically, a regular eMBB user may lose network coverage 402 and experience an actual "out of coverage" state, while an underlying network 408, such as WLAN, deployed at the coverage hole 404 or at the edge 406 of eMBB network may provide a service, and the user may be able to establish direct communication through supportive interface, such as Wi-Fi, as illustrated in Figure 4, which shows user equipments 410 out of NR signal coverage and in supportive network coverage.

On the other hand, a regular eMBB user may lose network coverage 502 and experience an actual "out of coverage" state, while an underlying network 508, such as a WLAN, deployed at the coverage hole 504 or at the edge 506 of eMBB network may be unavailable, and the user may experience complete lack of any service, including Wi-Fi, as illustrated in Figure 5, which shows user equipments 510 out of NR signal coverage and disconnected from supportive network coverage.

In future deployments, such as cell-less deployments, there will be no means to know real coverage/service "holes", that is, where there is really a connectivity interruption. For network providers, who may jointly serve the different infrastuctures, the problem lies in the interpretation whether radio/cell loss is equivalent to absolute disconnectivity.

In the present disclosure, a new state, "Out of Any Connectivity", is introduced to allow the UE to monitor the state and to enter it once loss of any alternate connection, as defined by the network, occurs. The UE will enter this state when it has no connection to any other network type available.

To enable this feature, the UE capability needs to be defined for controlling the "Out of Any Connectivity" state and its logging, so that the UE can detect an underlying connectivity, such as in WLAN or PC5, in case of "out of radio coverage", and, when the UE is in the "Out of Any Connectivity" state, it will perform data logging on the state.

The present disclosed solution requires a UE to have the capability to detect and log the "Out of Any Connectivity" state. This implies that a UE, which is selected for MDT session logging, supports at least one more interface that enables alternate connectivity to a Uu interface and Logged MDT extensions in the context of MDT configuration and MDT reporting signaling. The solution focuses upon existing underlying networks, but does not limit the applicability to future deployments like NTN.

Detailed implementation can be categorized into following three steps:

### 1. Data collection activation by the network

The data collection is triggered/configured from core network/OAM depending on the underlying connectivity. To achieve that, Trace Activation procedure from AMF/OAM to gNB can be extended to indicate "Out of Any Connectivity" parameter in jobType=Logged MDT. Also, RRC procedure for LoggedMeasurementConfiguration can be extended with new logged MDT event trigger, such as eventTriggered = outOfAnyConnectivity. This "Out of Any Connectivity" trigger can be configured per "service", for example, "Out of Any Connectivity" for "eMBB", "Out of Any Connectivity" for "V2X" users, etc. The configuration can also further indicate a per "service" trigger about which network types (out of the overall possible available networks) the UE should monitor in detecting "Out of Connectivity". This extends the configuration to tell the UE exactly which networks to monitor so that either "Out of Connectivity" is detected in all possible available networks if all of those are indicated for monitoring, which would be reflecting "Out of Any Connectivity" concept, or only for some of those, which would be reflecting "Out of Any Connectivity" in context of the given (predefined) networks alternate to radio to monitor after radio signal is lost. For instance, for the case of V2X service, it can be indicated that the UE should monitor all network types, such as PC5, BT, and WLAN, but the network may also ask more selectively detection of "Out of Connectivity" only for PC5 and WLAN or even only on PC5, as will be illustrated in Example 4 below.

Given the co-existence of parallel infrastructures, an operator or network provider may serve parallel deployments under the same core network, and may have an insight into what types of underlying connectivities are overlapping or neighboring with NR radio frequencies, thus, alternatively:
- "Out of Any Connectivity" trigger can be configured per network type/ connectivity, such as "out of Wi-Fi" or "out-of-PC5";
- "Out of Any Connectivity" can be reported on more than one configured network;
- "Out of Any Connectivity" is detected based on the lack of coverage jointly for one or more networks;
- "Out of Any Connectivity" trigger can be configured by the network on a set of different network types, such as "job Type = Logged MDT, event triggered = outOfAnyConnectivity, and network types (radio, Wi-Fi, PC5). The UE will be triggered to enter the "outOfAnyConnectivity" state when all of the network types indicated in the configuration have lost connectivity. Network can control on which network types it wants to detect the event, and those may be a subset of the available network types in some degenerate cases.

The network may further indicate in the network types that the UE is also allowed to search for non-3gpp network types to determine connectivity, for example, through a field "non-3gpp" in the MDT configuration.

### 2. Data Logging procedure in the UE

Logging in the UE starts by predefined connectivity trigger, for example according to configuration. If UE finds itself in out of NR radio coverage, it stores the information in internal memory. Out of NR coverage detection triggers monitoring of connectivity over other networks. If connectivity is found, "Out of Connectivity" state is not detected by the UE. If no other connectivity is found over available configured 3GPP connections, such as V2X, WLAN, satellite, and so forth, "Out of Any Connectivity" (or similarly "Out of Connectivity") is detected by the UE. For example,
- For V2X connectivity, the UE checks whether PC5 interface is detectable;
- For WLAN connectivity, the UE checks whether Wi-Fi beacons are detectable;
- For NTN connectivity, the UE checks whether a satellite signal is detectable;

If no connectivity is found over available preconfigured connections, for example, when a V2X user was configured to monitor more selectively detection of "Out of Connectivity" only for PC5 while WLAN is out of interest, "Out of Any Connectivity" is detected based on a check for a single alternate network. For V2X connectivity, the UE checks whether PC5 interface is detectable. "Out of Connectivity" state term can optionally be used to distinguish from "Out of any Connectivity", where the UE, after radio signal loss, scans all other possible network types. In the "Out of Connectivity" option of UE implementation, the UE distinguishes the state when no connectivity was detected only on a given network, alternate to radio, that was given in the prior configuration. If no other connectivity is found over available configured 3GPP connections, such as V2X or satellite, "Out of Any Connectivity" detection triggers monitoring of connectivity over non-3gpp networks, such as Wi-Fi or BT. In every case where no connectivity is found, the UE enters the "Out of Any Connectivity" state and triggers "Out of Any Connectivity" logging with an indication of all the networks it tried that failed. UE needs to store in internal memory the intermediate results of "out of coverage" detection, which requires a different UE behavior and acting on the configuration, as will be illustrated in the Examples below.

### 3. Logged Data Reporting Procedure by the UE and the gNB

Reporting of the information on "Out of Any Connectivity" relies on "UEInformationRequest" and "UEInformationResponse" messages with signaling extensions for "Out Of Any Connectivity" information, that also further maps to corresponding signaling onwards over network interfaces. The network here may retrieve "Out of Any Connectivity" information for only a set of network types by setting the "Out of Any Connectivity" request to monitor connectivity over those network types. Figure 6 illustrates configuration and unsuccessful detection of the "Out of Any Connectivity" state for eMBB traffic:
- Trace Activation for Logged MDT is initiated from OAM or Core network towards the gNB for eMBB traffic with parameter job Type=LoggedMDT, report Type=Out of Any Connectivity (step 602);
- gNB passes the configuration to the UE (step 604);
   ∘ gNB may select the UEs according to their joint capabilities, the UE that supports WLAN and Logged MDT with "Out of Any Connectivity" capability;
- UE stores the Configuration in VarLogMeasConfig and continuously monitors NR radio coverage (step 606);
- UE is in 5G Coverage but at some point detects it is out of 5G coverage (step 608);
   ∘ UE enters "Any Cell Selection State";
- UE stores "out of 5G radio coverage" information (step 610);
- UE detects Wi-Fi connectivity and thus its eMBB service continues (step 612);
   ∘ "Out of Any Connectivity" state is not entered.
- At some later point, UE is back in 5G coverage, and eMBB continues (step 614).

It should be noted that defining the state "Out of Any Connectivity" allows the network to trigger logging at the UE and final reporting of only a subset of the events that would be otherwise triggered under the "Out of Coverage" event. This helps the network to configure more focused logging at the UE, allowing the UE to log less information.

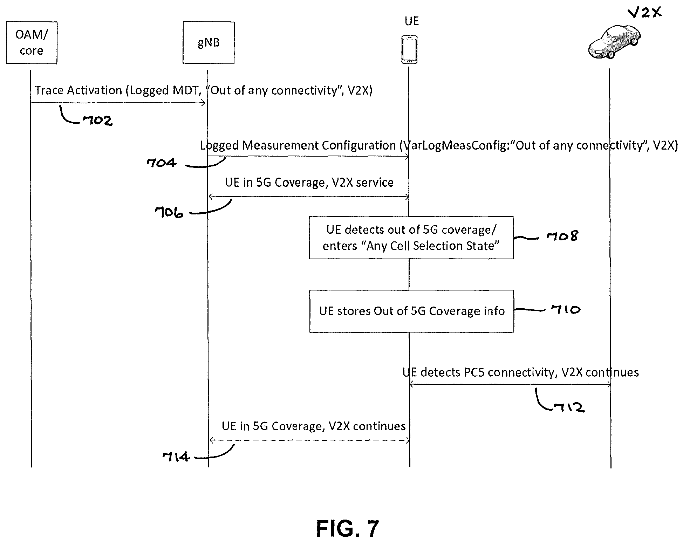

Figure 7 illustrates configuration and unsuccessful detection of the "Out of Any Connectivity" state for V2X traffic:
- Trace Activation for Logged MDT is initiated from OAM or Core network towards the gNB for V2X traffic with parameter job Type=LoggedMDT, report Type=Out of Any Connectivity (step 702);
- gNB passes the configuration to the UE (step 704);
   ∘ gNB may select the UEs according to their joint capabilities, the UE that supports V2X and Logged MDT with "Out of Any Connectivity" capability;
- UE stores the Configuration in VarLogMeasConfig and continuously monitors NR radio coverage (step 706);
- UE is in 5G Coverage but at some point detects it is out of 5G coverage (step 708);
   ∘ UE enters "Any Cell Selection State"
- UE stores "out of 5G radio coverage" information (step 710);
- UE detects PC5 connectivity and thus its V2X service continues (step 712);
   ∘ "Out of Any Connectivity" state is not entered;
- At some later point, UE is back in 5G coverage, and V2X continues (step 714).

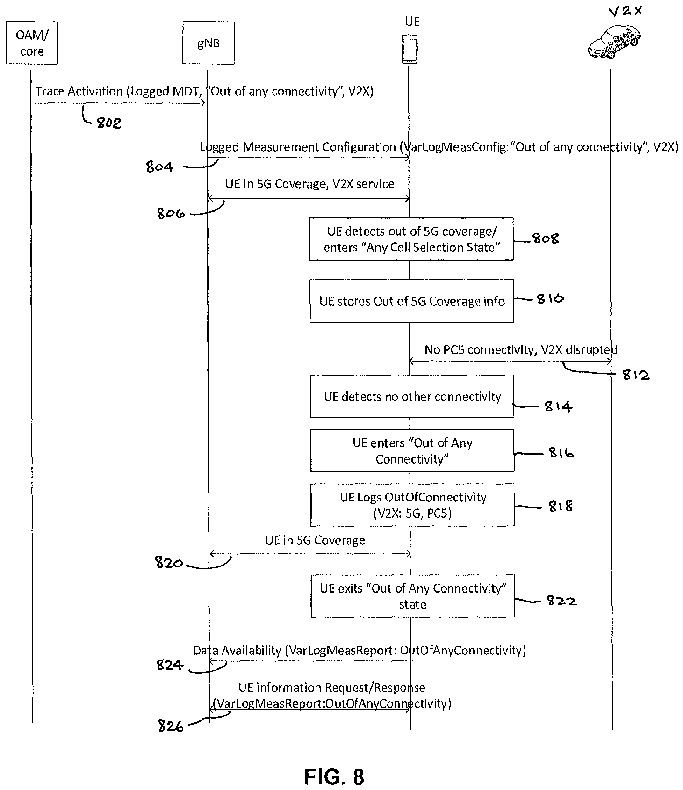

Example 3, illustrated in Figure 8, illustrates configuration and successful detection of the "Out of Any Connectivity" state for V2X traffic:
- Trace Activation for Logged MDT is initiated from OAM or Core network towards the gNB for V2X traffic with parameter job Type=LoggedMDT, report Type=Out of Any Connectivity (step 802);
- gNB passes the configuration to the UE (step 804);
   ∘ gNB may select the UEs according to their joint capabilities, the UE that supports V2X and Logged MDT with "Out of Any Connectivity" capability;
- UE stores the Configuration in VarLogMeasConfig and continuously monitors NR radio coverage (step 806);
- UE is in 5G Coverage but at some point detects it is out of 5G coverage (step 808);
   ∘ UE enters "Any Cell Selection State";
- UE stores "out of 5G radio coverage" information (step 810);
- UE does not detect PC5 connectivity (step 812);
   ∘ UE does not detect any other connectivity and thus its V2X service gets disrupted (step 814);
   ∘ "Out of Any Connectivity" state is entered (step 816);
   ∘ UE starts logging "Out of Any Connectivity" for its V2X service (step 818);
      - Details on the out of coverage over 5G and PC5 can be included;
- UE detects it is in 5G coverage (step 820);
   ∘ UE exits "Out of Any Connectivity" state (step 822);
- UE can indicate "Out of Any Connectivity" data availability" to the gNB (step 824);
- UE reports "Out of Any Connectivity" data to the gNB (step 826).

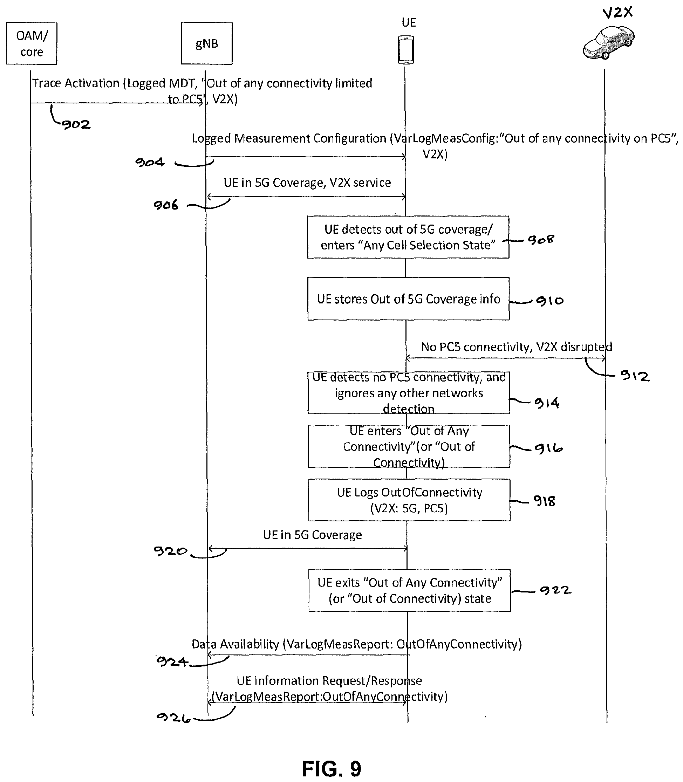

Example 4, illustrated in Figure 9, illustrates configuration and successful detection of the "Out of Any Connectivity" state for V2X traffic with selective configuration of the underlying network to monitor:
- Trace Activation for Logged MDT is initiated from OAM or Core network towards the gNB for V2X traffic and, in addition, selectively for which network in particular to monitor in case of radio loss. In the example, the configuration instructs for monitoring of PC5 (step 902);
- gNB passes the configuration to the UE (step 904);
   ∘ gNB may select the UEs according to their joint capabilities: the UE that supports V2X and selected networks support and Logged MDT with "Out of Any Connectivity" capability;
- UE stores the Configuration in VarLogMeasConfig and continuously monitors NR radio coverage (step 906);
- UE is in 5G Coverage but at some point detects it is out of 5G coverage (step 908);
   ∘ UE enters "Any Cell Selection State";
- UE stores "out of 5G radio coverage" information (step 910);
- UE does not detect PC5 connectivity (step 912);
   ∘ UE does not monitor any other connectivity (as the preconfigured network to monitor was PC5 only), thus its V2X service gets disrupted (step 914);
   ∘ "Out of Any Connectivity" state is entered (step 916);
   ∘ Optionally, the UE distinguishes the state "Out of Connectivity" from "Out of Any Connectivity", so that the UE enters a state "Out of Connectivity"
   ∘ UE starts logging "Out of Any Connectivity" for its V2X service and another supportive network (step 918);
      - Details on the out of coverage over 5G and PC5 are included in the log by the UE;
- UE detects it is in 5G coverage (step 920);
   ∘ UE exits "Out of Any Connectivity" state (step 922);
- UE can indicate "Out of Any Connectivity" data availability" to the gNB (step 924);
- UE reports "Out of Any Connectivity" data to the gNB (step 926).

With the disclosed solution, data contents are expected to be differentiated to provide reliable feedback on different services and better reflection of diverse 5G requirements, including the possibility to investigate WLAN, V2X, NTN (or any relevant network that support 5G deployments), user behaviors and experience in the co-existing networks.

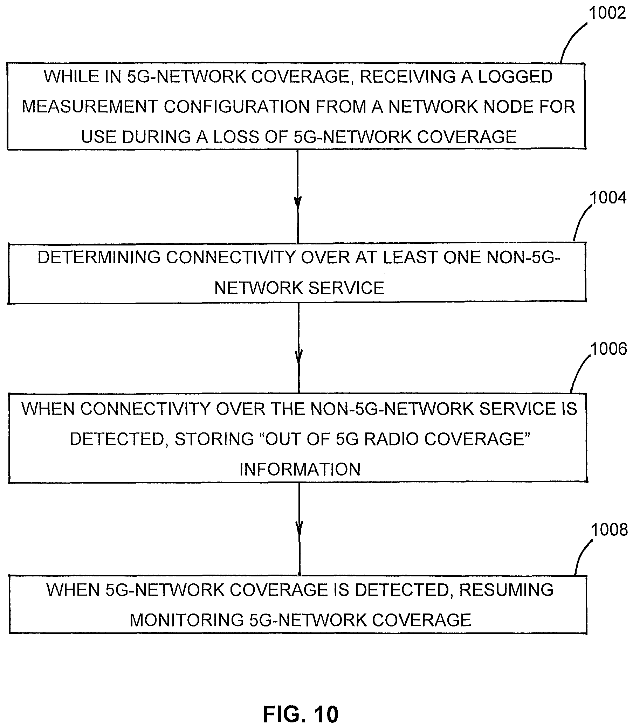

Figure 10 is a flow chart illustrating a method performed by a user equipment in one embodiment of the present disclosure. In block 1002, the user equipment receives, while in 5G-network coverage, a logged measurement configuration from a network node for use during a loss of 5G-network coverage. In block 1004, the user equipment determines connectivity over at least one non-5G-network service. In block 1006, the user equipment stores, when connectivity over the non-5G-network service is detected, "Out of 5G Radio Coverage" information. And, finally, in block 1008, the user equipment resumes, when 5G-network coverage is detected, monitoring 5G-network coverage.

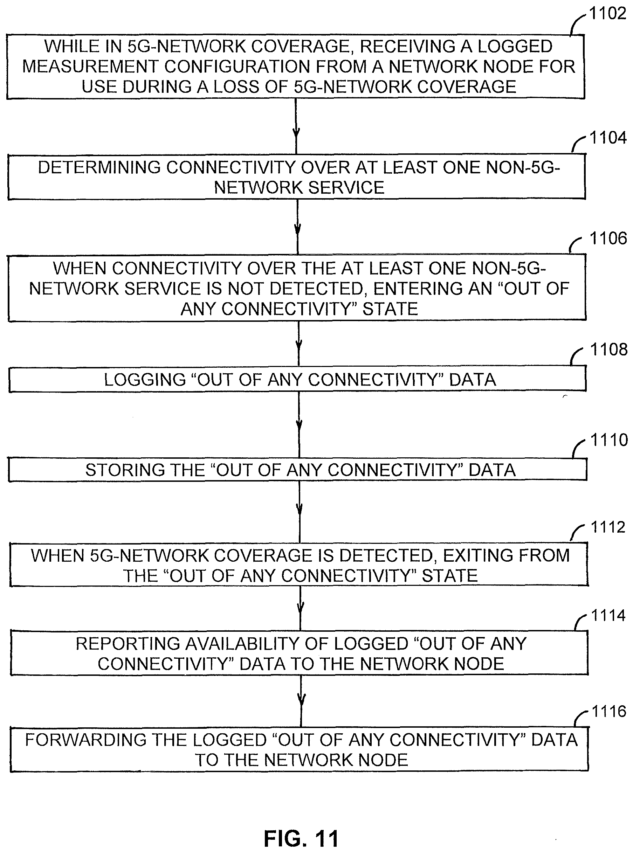

Figure 11 is a flow chart illustrating a method performed by a user equipment in another embodiment of the present disclosure. In block 1102, the user equipment receives, while in 5G-network coverage, a logged measurement configuration from a network node for use during a loss of 5G-network coverage. In block 1104, the user equipment determines connectivity over at least one non-5G-network service. In block 1106, the user equipment enters, when connectivity over the at least one non-5G-network service is not detected, an "Out of Any Connectivity" state. In block 1108, the user equipment logs "Out of Any Connectivity" data. In block 1110, the user equipment stores the "Out of Any Connectivity" data. In block 1112, the user equipment, when 5G-network coverage is detected, exits from the "Out of Any Connectivity" state. In block 1114, the user equipment reports availability of logged "Out of Any Connectivity" data to the network node. And, finally, in block 1116, the user equipment forwards the logged "Out of Any Connectivity" data to the network node.

In general, the various exemplary embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although the exemplary embodiments are not limited thereto.

While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should thus be appreciated that at least some aspects of the exemplary embodiments of the disclosure may be practiced in various components, such as integrated circuit chips and modules, and that the exemplary embodiments of this disclosure may be realized in an apparatus that is embodied as an integrated circuit. The integrated circuit, or circuits, may comprise circuitry, as well as possibly firmware, for embodying at least one or more of a data processor or data processors, a digital signal processor or processors, baseband circuitry and radio frequency circuitry that are configurable so as to operate in accordance with the exemplary embodiments of this disclosure.

Various modifications and adaptations to the foregoing exemplary embodiments of this disclosure may become apparent to those skilled in the relevant arts in view of the foregoing description, when read in conjunction with the accompanying drawings. For example, while the exemplary embodiments have been described above in the context of advancements to the 5G NR system, it should be appreciated that the exemplary embodiments of this disclosure are not limited for use with only this one particular type of wireless communication system. The exemplary embodiments of the disclosure presented herein are explanatory and not exhaustive or otherwise limiting.

The following abbreviations may have been used in the preceding discussion:
- AMF: Access Management Function
- BT: Bluetooth
- DL: Downlink
- D2D: Device-to-Device
- eMBB: enhanced Mobile Broadband
- eNB: eNodeB (4G Base Station)
- GHz: Gigahertz
- gNB: gNodeB (5G Base Station)
- IP: Internet Protocol
- LTE: Long Term Evolution
- MDT: Minimization of Drive Tests
- NR: New Radio (5G)
- NTN: Non-Terrestrial Networks
- OAM: Operation and Maintenance
- ProSe: Proximity Services
- RAN: Radio Access network
- RRC: Radio Resource Control
- RRM: Radio Resource Management
- SON: Self-Organizing Networks
- UE: User Equipment
- UL: Uplink
- VoIP: Voice over Internet Protocol
- V2V: Vehicle-to-Vehicle
- V2X: Vehicle-to-Everything
- Wi-Fi: Wireless Fidelity
- WLAN: Wireless Local Area Network
- 3GPP: 3^{rd} Generation Partnership Project
- 5G: 5^{th} Generation

The terminology used herein is for the purpose of describing particular embodiments only and is not intended to be limiting of the disclosed embodiments. As used herein, the singular forms "a", "an", and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

The description of the present exemplary embodiments has been presented for purposes of illustration and description, but is not intended to be exhaustive or limited to the embodiments in the form disclosed. Many modifications and variations will be apparent to those of ordinary skill in the art, provided that they do not depart from the scope of the claims. The embodiments were chosen and described in order to best explain the principles of the disclosure and the practical application, and to enable others of ordinary skill in the art to understand the disclosure for various embodiments with various modifications as are suited to the particular use contemplated.

## Claims

1. An apparatus (110) at a User Equipment, said apparatus comprising
Means for receiving (132), while in 5G-network coverage, a logged measurement configuration from a network node for use during a loss of 5G-network coverage;
means for monitoring 5G-network coverage
means for detecting a loss of 5G-network coverage;
means for determining connectivity over at least one non-5G-network service when 5G network coverage is detected to be lost;
means for storing (125) "Out of 5G Radio Coverage" information when connectivity over the non-5G-network service is detected; and
means for resuming monitoring 5G-network coverage when 5G-network coverage is detected, wherein the logged measurement configuration specifies a network type, wherein the network type is the at least one non-5G-network service and comprises one or more of vehicle-to-everything, V2X, wireless local area network, Wi-Fi, and non-terrestrial networks, NTN.

2. The apparatus as claimed in claim 1, wherein the logged measurement configuration includes a job type, and preferably the job type being a logged minimization of drive test (MDT) measurements; or
wherein the logged measurement configuration includes an event trigger, and preferably the event trigger being "Out of Any Connectivity".

3. The apparatus as claimed in claim 1, wherein determine connectivity includes:
in the case of V2X, checking whether a PC5 interface is detectable; or
in the case of WLAN, checking whether a Wi-Fi beacons are detectable; or
in the case of NTN, checking whether a satellite signal is detectable

4. The apparatus as claimed in claim 1, wherein the at least one non-5G-network service includes all available non-5G-network services.

5. The apparatus as claimed in claim 1, wherein the at least one non-5G-network service includes one or more non-3gpp networks, and preferably wherein the one or more non-3gpp networks include Bluetooth (BT).

6. An apparatus according to claim 1, further comprising:
means for entering an "Out of Any Connectivity" state, when connectivity over the at least one non-5G-network service is not detected;
means for logging "Out of Any Connectivity" data;
means for storing (125) the "Out of Any Connectivity" data;
means for exiting from the "Out of Any Connectivity" state, when 5G-network coverage is detected;
means for reporting availability of logged "Out of Any Connectivity" data to the network node; and
means for forwarding (133) the logged "Out of Any Connectivity" data to the network node.

7. A method performed by a user equipment , said method comprising:
while in 5G-network coverage, receiving (604, 704, 1002) a logged measurement configuration from a network node for use during a loss of 5G-network coverage, the logged measurement configuration specifying a network type;
monitoring (606, 706) 5G-network coverage
detecting (706, 708) a loss of 5G-network coverage;
determining (1004) whether connectivity over at least one non-5G-network service is detected, the at least one non-5G-network service being the network type specified in the logged measurement configuration and comprising one or more of vehicle-to-everything , V2X, wireless local area network, Wi-Fi, and non-terrestrial networks, NTN;
when connectivity over the non-5G-network service is detected (612, 712, 1006), storing (610, 710) "Out of 5G Radio Coverage" information; and
when 5G-network coverage is detected, resuming (614, 714, 1008) monitoring 5G-network coverage.

8. A method according to claim 7, further comprising:
when connectivity over the at least one non-5G-network service is not detected (812, 814, 912, 914), entering (816, 916, 1106) an "Out of Any Connectivity" state;
logging (818, 918, 1108) "Out of Any Connectivity" data;
storing (1110) the "Out of Any Connectivity" data;
when 5G-network coverage is detected, exiting (822, 922, 1112) from the "Out of Any Connectivity" state;
reporting (824, 924, 1114) availability of logged "Out of Any Connectivity" data to the network node; and
forwarding (826, 926, 1116) the logged "Out of Any Connectivity" data to the network node.

9. A computer program product comprising a non-transitory computer-readable storage medium bearing computer program code embodied therein for use with a computer, the computer program code comprising code which, when executed by an apparatus at a User Equipment, causes said apparatus to perform:
while in 5G-network coverage, receiving a logged measurement configuration from a network node for use during a loss of 5G-network coverage, the logged measurement configuration specifying a network type;
monitoring 5G-network coverage
determining connectivity over at least one non-5G-network service, the at least one non-5G-network service being the network type specified in the logged measurement configuration and comprising one or more of vehicle-to-everything , V2X, wireless local area network, and non-terrestrial networks , NTN;
detecting a loss of 5G-network coverage;
when connectivity over the non-5G-network service is detected, storing "Out of 5G Radio Coverage" information; and
when 5G-network coverage is detected, resuming monitoring 5G-network coverage.

10. A computer program product according to claim 9, the computer program code comprising code for performing:
when connectivity over the at least one non-5G-network service is not detected, entering an "Out of Any Connectivity" state;
logging "Out of Any Connectivity" data;
storing the "Out of Any Connectivity" data;
when 5G-network coverage is detected, exiting from the "Out of Any Connectivity" state;
reporting availability of logged "Out of Any Connectivity" data to the network node; and
forwarding the logged "Out of Any Connectivity" data to the network node.

11. A network comprising at least one apparatus as claimed in claim 1 or 6.

## Patentansprüche

1. Vorrichtung (110) an einer Teilnehmereinrichtung, wobei die Vorrichtung Folgendes umfasst:
Bei bestehender 5G-Netzwerkabdeckung Mittel zum Empfangen (132) einer protokollierten Messauslegung von einem Netzwerkknoten zur Verwendung während eines Verlusts einer 5G-Netzwerkabdeckung;
Mittel zum Überwachen einer 5G-Netzwerkabdeckung
Mittel zum Detektieren eines Verlusts einer 5G-Netzwerkabdeckung;
Mittel zum Bestimmen einer Konnektivität über mindestens einen Nicht-5G-Netzwerkdienst, wenn detektiert wird, dass eine 5G-Netzwerkabdeckung verloren wurde;
Mittel zum Speichern (125) von "5G-Funkabdeckung-verloren"-Information, wenn detektiert wird, dass eine Konnektivität über den Nicht-5G-Netzwerkdienst verloren wurde; und
Mittel zum Wiederaufnehmen des Überwachens der 5G-Netzwerkabdeckung, wenn die 5G-Netzwerkabdeckung detektiert wird, wobei die protokollierte Messauslegung eine Netzwerkart spezifiziert, wobei die Netzwerkart der mindestens eine Nicht-5G-Netzwerkdienst ist und eines oder mehreres von einem drahtlosen lokalen Fahrzeug-zu-allem(V2X)-Netzwerk, Wi-Fi, und nichtterrestrischen Netzwerken, NTN, umfasst.

2. Vorrichtung nach Anspruch 1, wobei die protokollierte Messauslegung eine Arbeitsart beinhaltet und wobei die Arbeitsart vorzugsweise eine protokollierte Minimierung von Antriebstest(MDT)-Messungen ist; oder
wobei die protokollierte Messauslegung einen Ereignisauslöser beinhaltet und wobei der Ereignisauslöser vorzugsweise "jede Konnektivität verloren" ist.

3. Vorrichtung nach Anspruch 1, wobei das Bestimmen der Konnektivität Folgendes beinhaltet:
im Fall von V2X Prüfen, ob eine PC5-Schnittstelle detektierbar ist; oder
im Fall von WLAN Prüfen, ob Wi-Fi-Beacons detektierbar sind; oder
im Fall von NTN Prüfen, ob ein Satellitensignal detektierbar ist

4. Vorrichtung nach Anspruch 1, wobei der mindestens eine Nicht-5G-Netzwerkdienst alle verfügbaren Nicht-5G-Netzwerkdienste beinhaltet.

5. Vorrichtung nach Anspruch 1, wobei der mindestens eine Nicht-5G-Netzwerkdienst ein oder mehrere Nicht-3gpp-Netzwerke beinhaltet und vorzugsweise wobei das eine oder die mehreren Nicht-3gpp-Netzwerke Bluetooth (BT) beinhalten.

6. Vorrichtung nach Anspruch 1, die ferner Folgendes umfasst:
Mittel zum Eintreten in einen "jede-Konnektivität-verloren"-Zustand, wenn die Konnektivität über den mindestens einen Nicht-5G-Netzwerkdienst nicht detektiert wird;
Mittel zum Protokollieren von "jede-Konnektivität-verloren"-Daten;
Mittel zum Speichern (125) der "jede-Konnektivität-verloren"-Daten;
Mittel zum Verlassen des "jede-Konnektivität-verloren"-Zustands, wenn eine 5G-Netzwerkabdeckung detektiert wird;
Mittel zum Melden einer Verfügbarkeit von protokollierten "jede-Konnektivität-verloren"-Daten beim Netzwerkknoten; und
Mittel zum Weiterleiten (133) der protokollierten "jede-Konnektivität-verloren"-Daten zum Netzwerkknoten.

7. Verfahren, das von einer Teilnehmereinrichtung durchgeführt wird, wobei das Verfahren Folgendes umfasst:
bei bestehender 5G-Netzwerkabdeckung Empfangen (604, 704, 1002) einer protokollierten Messauslegung von einem Netzwerkknoten zur Verwendung während eines Verlusts einer 5G-Netzwerkabdeckung, wobei die protokollierte Messauslegung eine Netzwerkart spezifiziert;
Überwachen (606, 706) einer 5G-Netzwerkabdeckung
Detektieren (706, 708) eines Verlusts einer 5G-Netzwerkabdeckung;
Bestimmen (1004), ob eine Konnektivität über mindestens einen Nicht-5G-Netzwerkdienst detektiert wird, wobei der mindestens eine Nicht-5G-Netzwerkdienst die Netzwerkart ist, die in der protokollierten Messauslegung spezifiziert ist, und eines oder mehreres von einem drahtlosen lokalen Fahrzeug-zu-allem(V2X)-Netzwerk, Wi-Fi, und nichtterrestrischen Netzwerken, NTN, umfasst;
wenn eine Konnektivität über den Nicht-5G-Netzwerkdienst detektiert (612, 712, 1006) wird, Speichern (610, 710) von "5G-Funkabdeckung-verloren"-Informationen; und
wenn eine 5G-Netzwerkabdeckung detektiert wird, Wiederaufnehmen (614, 714, 1008) des Überwachens einer 5G-Netzwerkabdeckung.

8. Verfahren nach Anspruch 7, das ferner Folgendes umfasst:
wenn keine Konnektivität über den mindestens einen Nicht-5G-Netzwerkdienst detektiert (812, 814, 912, 914) wird, Eintreten (816, 916, 1106) in einen "jede-Konnektivität-verloren"-Zustand;
Protokollieren (818, 918, 1108) von "jede-Konnektivität-verloren"-Daten;
Speichern (1110) der "jede-Konnektivität-verloren"-Daten;
Verlassen (822, 922, 1112) des "jede-Konnektivität-verloren"-Zustands, wenn eine 5G-Netzwerkabdeckung detektiert wird;
Melden (824, 924, 1114) einer Verfügbarkeit von protokollierten "jede-Konnektivität-verloren"-Daten beim Netzwerkknoten; und
Weiterleiten (826, 926, 1116) der protokollierten "jede-Konnektivität-verloren"-Daten zum Netzwerkknoten.

9. Computerprogrammprodukt, das ein nichttransitorisches computerlesbares Speichermedium umfasst, auf dem sich Computerprogrammcode zur Verwendung mit einem Computer befindet, wobei der Computerprogrammcode Code umfasst, der, wenn er von einer Vorrichtung an einer Teilnehmereinrichtung ausgeführt wird, die Vorrichtung veranlasst, Folgendes durchzuführen:
bei bestehender 5G-Netzwerkabdeckung Empfangen einer protokollierten Messauslegung von einem Netzwerkknoten zur Verwendung während eines Verlusts einer 5G-Netzwerkabdeckung, wobei die protokollierte Messauslegung eine Netzwerkart spezifiziert;
Überwachen einer 5G-Netzwerkabdeckung
Bestimmen einer Konnektivität über mindestens einen Nicht-5G-Netzwerkdienst, wobei der mindestens eine Nicht-5G-Netzwerkdienst die Netzwerkart ist, die in der protokollierten Messauslegung spezifiziert ist, und eines oder mehreres von einem drahtlosen lokalen Fahrzeug-zu-allem(V2X)-Netzwerk, Wi-Fi, und nichtterrestrischen Netzwerken, NTN, umfasst;
Detektieren eines Verlusts einer 5G-Netzwerkabdeckung;
wenn eine Konnektivität über den Nicht-5G-Netzwerkdienst detektiert wird, Speichern von "5G-Funkabdeckung-verloren"-Informationen; und
wenn eine 5G-Netzwerkabdeckung detektiert wird, Wiederaufnehmen des Überwachens einer 5G-Netzwerkabdeckung.

10. Computerprogrammprodukt nach Anspruch 9, wobei der Computerprogrammcode Code zum Durchführen von Folgendem umfasst:
wenn keine Konnektivität über den mindestens einen Nicht-5G-Netzwerkdienst detektiert wird, Eintreten in einen "jede-Konnektivität-verloren"-Zustand;
Protokollieren von "jede-Konnektivität-verloren"-Daten;
Speichern der "jede-Konnektivität-verloren"-Daten;
Verlassen des "jede-Konnektivität-verloren"-Zustands, wenn eine 5G-Netzwerkabdeckung detektiert wird;
Melden einer Verfügbarkeit von protokollierten "jede-Konnektivität-verloren"-Daten beim Netzwerkknoten; und
Weiterleiten der protokollierten "jede-Konnektivität-verloren"-Daten zum Netzwerkknoten.

11. Netzwerk, das mindestens eine Vorrichtung nach Anspruch 1 oder 6 umfasst.

## Revendications

1. Appareil (110) au niveau d'un équipement utilisateur, ledit appareil comprenant :
des moyens pour recevoir (132) d'un nœud de réseau, dans une couverture de réseau 5G, une configuration de mesure enregistrée pour son utilisation pendant une perte de couverture de réseau 5G ;
des moyens pour surveiller une couverture de réseau 5G
des moyens pour détecter une perte de couverture de réseau 5G ;
des moyens pour déterminer la connectivité sur au moins un service de réseau non 5G lorsqu'une couverture de réseau 5G est détectée comme perdue ;
des moyens pour stocker (125) des informations "Hors couverture radio 5G" lorsqu'une connectivité sur le service de réseau non 5G est détectée ; et
des moyens pour reprendre la surveillance d'une couverture de réseau 5G lorsqu'une couverture de réseau 5G est détectée,
dans lequel la configuration de mesure enregistrée spécifie un type de réseau, dans lequel le type de réseau est l'au moins un service de réseau non 5G et comprend un ou plusieurs parmi un réseau de véhicule à X, V2X, un réseau de réseau local sans fil, un réseau de WIFI et un réseau non terrestre, NTN.

2. Appareil selon la revendication 1, dans lequel la configuration de mesure enregistrée comporte un type de tâche, et de préférence le type de tâche est une minimisation enregistrée de mesures de test de conduite (MDT) ; ou
dans lequel la configuration de mesure enregistrée comporte un déclencheur d'événement, et de préférence le déclencheur d'événement est "Hors de toute connectivité".

3. Appareil selon la revendication 1, dans lequel le fait de déterminer la connectivité comporte ce qui suit :
dans le cas du V2X, vérifier si une interface PC5 est détectable ; ou
dans le cas du WLAN, vérifier si des balises Wifi sont détectables ; ou
dans le cas du NTN, vérifier si un signal satellite est détectable.

4. Appareil selon la revendication 1, dans lequel l'au moins un service de réseau non 5G comporte tous les services de réseau non 5G disponibles.

5. Appareil selon la revendication 1, dans lequel l'au moins un service de réseau non 5G comporte un ou plusieurs réseaux non 3GPP, et de préférence dans lequel les un ou plusieurs réseaux non 3GPP comportent Bluetooth (BT).

6. Appareil selon la revendication 1, comprenant en outre :
des moyens pour entrer dans un état "Hors de toute connectivité" en l'absence de détection d'une connectivité sur l'au moins un service de réseau non 5G ;
des moyens pour enregistrer des données "Hors de toute connectivité" ;
des moyens pour stocker (125) les données "Hors de toute connectivité" ;
des moyens pour sortir de l'état "Hors de toute connectivité" lorsqu'une couverture de réseau 5G est détectée ;
des moyens pour signaler la disponibilité de données "Hors de toute connectivité" enregistrées au nœud de réseau ; et
des moyens pour transférer (133) les données "Hors de toute connectivité" enregistrées au nœud de réseau.

7. Procédé effectué par un équipement utilisateur ledit procédé comprenant les étapes suivantes :
dans une couverture de réseau 5G, recevoir (604, 704, 1002) d'un nœud de réseau une configuration de mesure enregistrée pour son utilisation pendant une perte de couverture de réseau 5G, la configuration de mesure enregistrée spécifiant un type de réseau ;
surveiller (606, 706) une couverture de réseau 5G
détecter (706, 708) une perte de couverture de réseau 5G ;
déterminer (1004) si une connectivité sur au moins un service de réseau non 5G est détectée, l'au moins un service de réseau non 5G étant le type de réseau spécifié dans la configuration de mesure enregistrée et comprenant un ou plusieurs parmi un réseau de véhicule à X, V2X, un réseau de réseau local sans fil, un réseau de WIFI et un réseau non terrestre, NTN ;
lorsqu'une connectivité sur le service de réseau non 5G est détectée (612, 712, 1006), stocker (610, 710) des informations "Hors couverture radio 5G" ; et
lorsqu'une couverture de réseau 5G est détectée, reprendre (614, 714, 1008) la surveillance d'une couverture de réseau 5G.

8. Procédé selon la revendication 7, comprenant en outre :
en l'absence de détection (812, 814, 912, 914) d'une connectivité sur l'au moins un service de réseau non 5G, entrer (816, 916, 1106) dans un état "Hors de toute connectivité" ;
enregistrer (818, 918, 1108) enregistrer des données "Hors de toute connectivité" :
stocker (1110) les données "Hors de toute connectivité" ;
lorsqu'une couverture de réseau 5G est détectée, sortir (822, 922, 1112) de l'état "Hors de toute connectivité" ;
signaler (824, 924, 1114) la disponibilité de données "Hors de toute connectivité" enregistrées au nœud de réseau : et
transférer (824, 924, 1114) la disponibilité de données "Hors de toute connectivité" enregistrées au nœud de réseau : et
transférer (826, 926, 1116) les données "Hors de toute connectivité" enregistrées au nœud de réseau.

9. Produit de programme informatique comprenant un support de stockage non transitoire lisible par ordinateur contenant un code de programme informatique qui y est incorporé pour son utilisation avec un ordinateur, le code de programme informatique comprenant un code qui, lorsqu'il est exécuté par un appareil au niveau d'un équipement utilisateur, amène ledit appareil à effectuer ce qui suit :
dans une couverture de réseau 5G, recevoir d'un nœud de réseau une configuration de mesure enregistrée pour son utilisation pendant une perte de couverture de réseau 5G, la configuration de mesure enregistrée spécifiant un type de réseau ;
surveiller une couverture de réseau 5G
déterminer la connectivité sur au moins un service de réseau non 5G, l'au moins un service de réseau non 5G étant le type de réseau spécifié dans la configuration de mesure enregistrée et comprenant un ou plusieurs parmi un réseau de véhicule à X, V2X, un réseau de réseau local sans fil, un réseau de WIFI et un réseau non terrestre, NTN ;
détecter une perte de couverture de réseau 5G ;
lorsqu'une connectivité sur le service de réseau non 5G est détectée, stocker des informations "Hors couverture radio 5G" ; et
lorsqu'une couverture de réseau 5G est détectée, reprendre la surveillance d'une couverture de réseau 5G.

10. Produit de programme informatique selon la revendication 9, le code de programme informatique comprenant un code pour effectuer ce qui suit :
en l'absence de détection d'une connectivité sur l'au moins un service de réseau non 5G,
entrer dans un état "Hors de toute connectivité" ;
enregistrer des données "Hors de toute connectivité" ;
stocker les données "Hors de toute connectivité";
lorsqu'une couverture de réseau 5G est détectée, sortir de l'état "Hors de toute connectivité" ;
signaler la disponibilité de données "Hors de toute connectivité" enregistrées au nœud de réseau ; et
transférer les données "Hors de toute connectivité" enregistrées au nœud de réseau.

11. Réseau comprenant au moins un appareil selon la revendication 1 ou 6.
